# EUROPÄISCHE PATENTSCHRIFT

(11) **EP 1 374 457 B1**
(45) Veröffentlichungstag und Bekanntmachung des Hinweises auf die Patenterteilung: **15.12.2004**
(21) Anmeldenummer: 02750920.7
(22) Anmeldetag: 13.05.2002
(51) Int. Cl.: H04H 1/10

(54) **ÜBERTRAGUNGSVERFAHREN UND ÜBERTRAGUNGSEINRICHTUNG FÜR AUDIO- UND/ODER VISUELLE PROGRAMME**
TRANSMISSION METHOD AND TRANSMISSION DEVICE FOR AUDIO AND/OR VISUAL PROGRAMMES
PROCEDE DE TRANSMISSION ET DISPOSITIF DE TRANSMISSION POUR PROGRAMMES AUDIO- ET/OU VISUELS

(30) Priorität: 14.05.2001 DE 20108146 U
(43) Veröffentlichungstag der Anmeldung: 02.01.2004
(73) Patentinhaber: Dietrich, Oliver, 86159 Augsburg (DE); Kimmich, Michael, 86153 Augsburg (DE)
(72) Erfinder: Dietrich, Oliver, 86159 Augsburg (DE); Kimmich, Michael, 86153 Augsburg (DE)
(74) Vertreter: Ernicke, Klaus Stefan
(86) Internationale Anmeldenummer: PCT/EP2002/005232
(87) Internationale Veröffentlichungsnummer: WO 2002/093799

(56) Entgegenhaltungen:
- EP-A- 1 089 207
- US-A- 5 726 909

## Beschreibung

Die Erfindung betrifft ein Übertragungsverfahren und eine Übertragungseinrichtung für Audio- und visuelle Programme zwischen mindestens einem Anbieter und ein oder mehreren Kunden.

In der Praxis ist es bekannt, dass Firmen, z.B. Supermärkte, Autohäuser oder dergleichen für ihr Publikum Hintergrundmusik abspielen und bisweilen auch Werbedurchsagen machen. Die Musik kommt von einem vorgefertigten Band oder einem anderen Datenträger, der bisweilen gewechselt wird. Die Werbedurchsagen werden hierbei manuell eingeblendet. Der Umfang und der Abwechslungsreichtum dieser Hintergrundmusik und Werbedurchsagen ist beschränkt- Die Präsentationen müssen von der Firma selbst erstellt werden.

Andererseits ist es bekannt, im Rundfunk und im Fernsehen ein Unterhaltungsprogramm mit Werbeblöcken zu mischen.
Dieses Programm wird kundenunspezifisch über Sender terrestrisch ausgestrahlt oder per Kabel oder Satellit übertragen. Alle Empfänger erhalten hierbei das gleiche Programm bzw. Programmspektrum.

Aus der US-A-6,082,500 ist ein Informationsanzeigesystem für Fahrstühle bekannt, das.eine Zentralsteuerung mit einem zentralen systemserver, daran angeschlossene Stadtserver und hieran wieder angeschlossene Gebäudeserver umfasst, die mit Anzeigeeinheiten in den Fahrstühlen kommunizieren. Die Anzeigeeinheiten bestehen aus einem Computer mit eigener CPU, Datenspeicher und einem Monitor. Das Netzwerk ist vorrangig zur Übermittlung von Bilddaten vorgesehen. Die Daten werden vom Zentralserver bereit gestellt und im Push-Modus über die Stadtserver oder auf direktem Wege zu den Gebäudeservern geschickt. Beim zentralen Server werden die Informationsseiten gesammelt. Dies können Verkehrsnachrichten, Fahrpläne öffentlicher Verkehrsmittel, Videoclips mit Geschäfts- und Finanznachrichten, Börsendaten, Sport-, Wetter- und sonstige Informationen sein. Diese zentral gesammelten Daten sind für alle angeschlossenen Gebäudeserver und Anzeigeeinheiten gleich. Sie können gegebenenfalls in einzelnen Städten oder Gebäuden durch spezifische Informationen ergänzt werden, zum Beispiel Werbung von ortsansässigen Firmen, örtliche Nachrichten oder dergleichen. Die übermittelten Daten werden auf dem Speicher der Anzeigeeinheiten zusammen mit einem Zeitplan gespeichert. Der Computer der Anzeigeeinheit ruft entsprechend des Zeitplans die einzelnen Bildinformationen auf und stellt sie auf seinem Monitor dar. Die Funktion der Anzeigeeinheiten kann von den Servern fernüberwacht und ferngewartet werden.

Die EP 1 089 207 A2 befasst sich mit der Bereitstellung und dem Zuschnitt von Multimedia-Programmen an einen großen unbeschränkten Benutzerkreis, wobei die Programmdaten im "Streaming"-Modus übermittelt werden. Hierbei wird beim Sender oder Anbieter ein breit angelegtes und zunächst einmal für alle Endkunden oder Nutzer zugriffsfähiges Gesamtprogramm, z.B. ein Fernsehprogramm, erstellt. Dies ist ein für alle Kunden gleiches Basisprogramm mit anschließender kundenspezifischer Auswahl- und Einschränkungsmöglichkeit. Der Kundenzuschnitt und die Auswahl von einzelnen Programmbestandteilen aus dem Gesamtangebot erfolgt durch Filterung. Die Filterung kann zum einen beim Sender geschehen, der dann nur ausgewählte Daten übermittelt. Die Auswahl und Filterung kann auch beim Kunden vor Ort erfolgen, der aus dem übermittelten Gesamtangebot die gewünschten Daten heraussortiert.

Die US-A-5,726,909 offenbart eine Technik, bei der vom Anbieter dem Kunden alle gewünschten und verfügbaren Programmkomponenten übertragen werden. Dies geschieht auf indirektem Weg über eine Zwischenstation. Zudem werden alle Programmdaten beim Kunden gespeichert. Der Kunde hat dann letztendlich die komplette Programmhoheit, weil er aus den gespeicherten Daten das Programm mit dem gewünschten Ablauf selbst zusammenstellen und abspielen muss. Es besteht keine Fernsteuermöglichkeit seitens des Anbieters.

Es ist Aufgabe der vorliegenden Erfindung, Firmen mit Publikumsverkehr ein breiteres und besseres Unterhaltungs- und Informationsspektrum anbieten zu können.

Die Erfindung löst diese Aufgabe mit den Merkmalen im Verfahrens- und Vorrichtungshauptanspruch.
Von einem Anbieter, der über mindestens eine Basisstation verfügt, werden ein oder mehrere Audioprogramme und/oder visuelle Programme für Kunden spezifisch produziert und mittels der beanspruchten Übertragungseinrichtung beim Kunden abgespielt. Jeder Kunde kann dabei gezielt sein eigenes und für ihn direkt zugeschnittenes Programm erhalten. Die Programme bestehen aus Audio-Komponenten, z.B. Musiktiteln, Werbedurchsagen, allgemeinen Informationen und dergleichen. Zusätzlich oder alternativ können auch visuelle Programmelemente vorhanden sein. Dies können zum einen stehende oder laufende Bilder, aber auch andere Arten von optischen Effekten, wie Lichtveränderungen im Kundenraum, Blinklichter, Farblichtänderungen oder dergleichen sein. Der Kunde oder die Firma mit Publikumsverkehr braucht sich dadurch selbst nicht mehr um diese Programme zu kümmern, sondern erhält ein komplettes und fertiges Programmangebot, das nur noch abgespielt werden braucht. Über ein geeignetes Datenübertragungsnetzwerk mit bidirektionaler Kommunikation können diese Programmdaten dem Kunden direkt übertragen und beim Kunden abgespielt werden.

Für das Datenübertragungsnetzwerk gibt es verschiedene Möglichkeiten, wie direkte Telefonverbindungen, Satellitenübertragung, Richtfunk, Austausch von Datenträgern und dergleichen. Aus Kosten- und Aufwandsgründen wird eine Datenübertragung über das Internet bevorzugt, was ebenfalls einen direkten Datenaustausch zwischen Anbieter und Kunde über Server mit der besonders einfachen Möglichkeit der Bidirektionalität eröffnet. Über das Internet können nicht nur die Programme oder Teile der Programme an den Kunden übertragen werden. Umgekehrt kann der Kunde auch beim Anbieter bereit liegende Programme abrufen und dabei ggf. aus einem breiteren Angebot auswählen. Der Kunde kann die volle Programmhoheit haben. Ferner ist auch eine Ferndiagnose oder Fernwartung möglich.

Für die Datenübertragung werden vorzugsweise Computer bei Anbieter und Kunden eingesetzt, die mit entsprechenden Soft- und Hardwarekomponenten ausgerüstet sind. Hierbei ist es aus Kosten- und Aufwandsgründen besonders vorteilhaft, wenn zumindest Teile der wiederkehrenden Audioelemente und/oder visuellen Elemente bereits beim Kunden auf dem Computer gespeichert sind und dort nur noch über einen Steuerbefehl vor Ort abgerufen und mittels einer vorzugsweise ebenfalls beim Kunden gespeicherten Abspielsoftware abgespielt werden. Dies reduziert die zwischen Anbieter und Kunde zu übertragende Datenmenge, erhöht die Leistung und senkt die Kosten. Ein datenaufwändiges "Streaming" kompletter, umfangreicher Programme kann entfallen. Jeder Kunde kann ein speziell auf ihn zugeschnittenes Programm erhalten, wobei die kompletten Kunden-Programme erst vor Ort beim Kunden unter Zugriff auf kundenseitig gespeicherte Daten entstehen. Die einzelnen Kunden-Programme können vollkommen unterschiedlich sein. Gegenstand der Erfindung ist neben dem Übertragungsverfahren auch ein Verfahren nebst Vorrichtung zum Erstellen und Abspielen von Programmen mit audio- und/oder visuellen Komponenten beim Kunden.

Ferner ist es günstig, wenn die kundenseitigen Computer als fernsteuerbare Terminals ohne eigenständige örtliche Eingriffsmöglichkeiten ausgebildet sind. Hierdurch können Fehlbedienungen oder andere unbeabsichtigte Störungen weitgehend ausgeschlossen werden.

In den Unteransprüchen sind weitere vorteilhafte Ausgestaltungen der Erfindung angegeben.

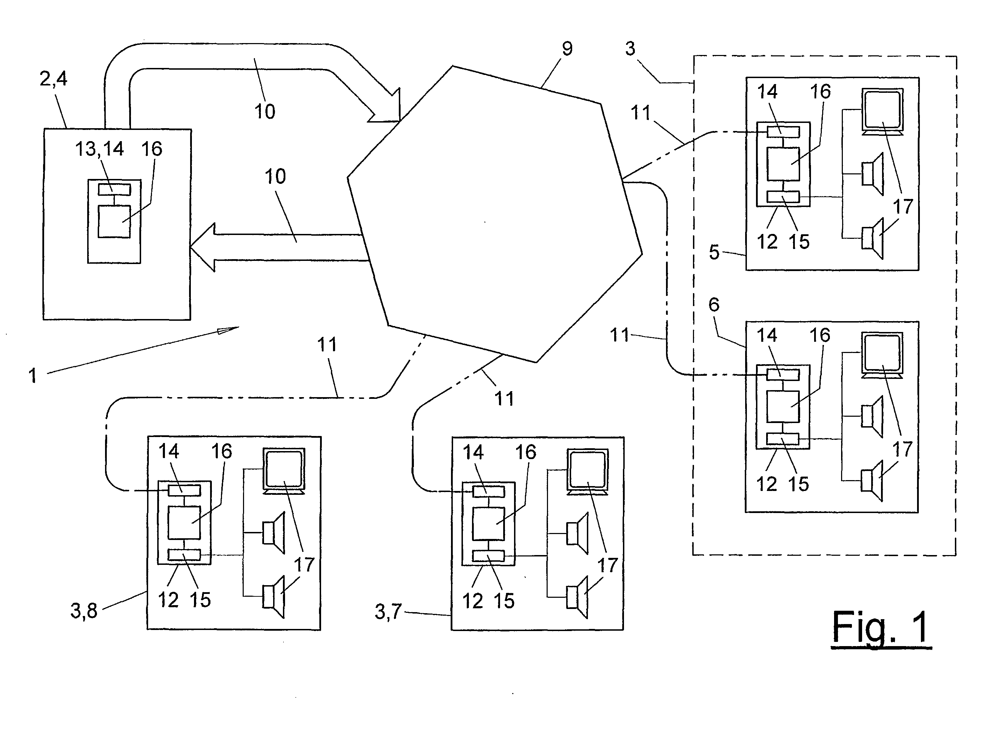

Die Erfindung ist in der Zeichnung der Figur 1 schematisch dargestellt. Sie zeigt:
- Figur 1:: eine Übertragungseinrichtung mit einer Basisstation bei einem Anbieter und mehreren Kundenstationen bei verschiedenen Kunden und ein Datenübertragungsnetzwerk.

In Figur 1 ist eine Übertragungseinrichtung (1) zwischen mindestens einem Anbieter (2) und ein oder mehreren Kunden (3) dargestellt. Die Übertragungseinrichtung (1) dient zur Übertragung und Wiedergabe von Audio- und/oder visuellen Programmen, die zumindest in ihrem Ablauf vom Anbieter (2) erstellt und beim einzelnen Kunden (3) vor Ort abgespielt werden. Hierbei kann jeder Kunde (3) sein eigenes und für ihn spezifisch zusammengestelltes Programm erhalten.

Die Programme können aus verschiedenen Komponenten bestehen, die sich nach Art und Inhalt oder sonstigen Kriterien unterscheiden. Die Komponenten können in ihrer Art z.B. Audiokomponenten sein, wie Musikstücke, Jingles, Werbespots, Wortbeiträge, Nachrichten und andere Arten von akustischen Informationen. Zusätzlich oder alternativ können die Programme auch visuelle oder optische Komponenten enthalten, wie z.B. Videoclips, Standbilder, optische Effekte, wie Blinklichter, Lauflichter, Änderungen des Raumlichtes beim Kunden (3) nach Farbe, Helligkeit oder dergleichen.

Ferner können sich die Komponenten in inhaltsvariable und in inhaltskonstante Komponenten unterteilen. Inhaltsvariabel sind z.B. Musikstücke, Nachrichten und Werbedurchsagen, die nach den Hitparaden, dem täglichen Geschehen und dem momentanen Warenangebot in einem vorgegebenen Rhythmus, z.B. täglich, oder auf Anfall bzw. willkürlich aktualisiert werden. Inhaltskonstant sind z.B. akustische und/oder optische Werbebeiträge, Jingles und dergleichen, die für den Kunden spezifisch sind und durch häufige Wiederholung über einen längeren Zeitraum zu dessen Identifikation und Wiedererkennung beitragen. Inhaltskonstante Komponenten unterliegen zwar auch der Änderung und Aktualisierung, allerdings in größeren Abständen als die inhaltsvariablen Komponenten.

Vorzugsweise wird zumindest ein Teil dieser Audio- und/oder visuellen Komponenten, z.B. aktuelle Musiktitel, moderne visuelle Effekte, aktuelle Nachrichten etc. vom Anbieter (2) produziert oder bereit gestellt. Andere Komponenten, z.B. eigene oder zulieferseitige Werbespots, Jingles oder dgl. können vom Kunden (3) produziert und dem Anbieter (2) zum Einbau in das Programm zur Verfügung gestellt werden.

Die verschiedenen Audio- und/oder visuellen Komponenten werden vom Anbieter (2) bei der Programmerstellung in einem Ablaufplan miteinander kombiniert und aufeinander abgestimmt. Für die Zusammenstellung und Verbindung sowie die Wiedergabe dieser Audio- und/oder visuellen Komponenten sind Softwarekomponenten, wie sogenannte Playlisten, Radiosoftware und Abspielprogramme vorhanden.

Der Anbieter (2) hat mindestens eine Basisstation (4), in der das Programm zusammengestellt wird. Die Kunden (3) haben jeweils ein oder mehrere Kundenstationen (5,6,7,8), in denen die Programme abgespielt werden. Ein Kunde (3) kann hierbei auch mehrere Kundenstationen (5,6) haben, die örtlich getrennt sind und eigenständig vom Anbieter (2) mit gleichen oder auch unterschiedlichen Programmen versorgt werden. Die Kundenstationen (5,6,7,8) sind z.B. Verkaufsräume bei Handelshäusern, wie Supermärkten, Autohäusern und dergleichen. Die Kundenstationen können auch andere Arten von Aufenthaltsräumen für das Publikum sein, wie z.B. Wartezimmer bei Ärzten oder anderen Freiberuflern, Warteräume, Aufenthaltsräume oder andere Publikumsräume bei öffentlichen Stellen oder dergleichen. Die Programme sind hierbei jeweils auf den Einsatzbereich und die Kundenbedürfnisse spezifisch zugeschnitten.

Die kompletten Programme oder nur Programmteile werden mittels eines Datenübertragungsnetzwerkes (9) vom Anbieter (2) an die Kunden (3) übertragen. Die Verbindung ist hierbei vorzugsweise bidirektional. Die Datenübertragungswege vom Anbieter (2) an die Kunden (3) und umgekehrt vom einzelnen Kunden (3) an den Anbieter (2) können gleich oder unterschiedlich sein. Außerdem können in der Kommunikationsrichtung unterschiedliche Datenübertragungswege parallel genutzt werden.

Das Datennetzwerk (9) ist vorzugsweise das Internet, wobei die Datenübertragung mittels Datenleitungen (10) auf Seiten des Anbieters und Datenleitungen (11) auf Kundenseite unter Einsatz geeigneter Server und Client-Software erfolgt. Beim Internet wird für die bidirektionale Kommunikation der gleiche Datenübertragungsweg benutzt. Alternativ kann die Datenübertragung auch per Telefonleitung im Direktwahlverfahren erfolgen.

In weiteren Varianten ist eine Datenübertragung per Satellitenübertragung, per Richtfunk, per Austausch von Datenträgern oder auf andere Weise möglich. Eine Satellitenübertragung hat Vorteile, wenn viele Kunden an weit verzweigten Orten versorgt werden. Für einen örtlichen Nahversorgungsbereich kann eine Datenübertragung per CD, DVD, Magnetband oder anderen Datenträgern mit Botenzustellung günstig sein. Die umgekehrte Kommunikation vom Kunden (3) mit dem Anbieter (2) kann hierbei auf anderem Wege, z.B. per Telefon- oder Datenleitung geschehen.

Außerdem sind Mischformen möglich, wobei z.B. vom Anbieter (2) aus Wirtschaftlichkeitsgründen größere Datenmengen per Satellitenübertragung, Austausch von Datenträgern oder dgl. und parallel kleinere Datenmengen, z.B. kleine Steuerprogramme, per Internet, Telefonleitung etc. zum Kunden (3) übertragen werden. Die zu übertragenden Daten sind hierfür entsprechend gesplittet und können auch zeitversetzt übertragen werden.

Über das Datenübertragungsnetzwerk (9) werden die Programmdaten den jeweiligen Kunden (3) bzw. Kundenstationen (5,6,7,8) direkt und kundenspezifisch übertragen. Jeder Kunde (3) bzw. jede Kundenstation (5,6,7,8) erhält dadurch das speziell für sie zusammengestellte Programm.

Die Datenleitung (10) des Anbieters (2) ist auf hohe Übertragungsraten ausgelegt. Die Datenleitungen (11) zum Kunden (3) bzw. zur Kundenstation (5,6,7,8) können als normale Internetverbindungen per Analogleitung, ISDN-Leitung oder SDSL-Leitung sowie per Wahlleitung oder Standleitung bzw. Festverbindung erfolgen. Durch die Internetverbindung ist hierbei der Hardwareeinsatz und der Kostenaufwand auf Kundenseite sehr gering und kleiner als bei einer Anbindung per Satellit.

Zum Senden und Empfangen der Daten sind jeweils in der Basisstation (4) und den Kundenstationen (5,6,7,8) ein oder mehrere Computer (12) installiert, die über eine geeignete DFÜ-Schnittstelle (14) an die Datenleitungen (10,11) angeschlossen sind. Die Computer (12) beinhalten ferner mindestens einen Datenspeicher (16). Der Datenaustausch erfolgt über einen geeigneten Server (13), der vorzugsweise beim Anbieter (2) angesiedelt ist, alternativ aber auch ein anderer fremder Provider sein kann. Auf Kundenseite haben die Computer (12) zudem mindestens eine Audio- und/oder visuelle Ausgabe-Schnittstelle (15), an die ein oder mehrere geeignete Wiedergabeeinheiten (17), wie z.B. Lautsprecher, Monitore, Bildwerfer für Leinwände, Lichtanlagen oder dergleichen angeschlossen sind.

Im gezeigten Ausführungsbeispiel hat jede Kundenstation (5,6,7,8) ihren eigenen Computer (12) mit Datenleitung (11) und Wiedergabeeinheiten (17). Alternativ können auch mehrere Kundenstationen (5,6) kundenintern zusammengeschlossen sein und dabei jeweils eigene Wiedergabeeinheiten (17) besitzen, die aber mit einem gemeinsamen und z.B. in der Kundenzentrale positionierten Computer (12) verbunden sind. Die Verbindung zwischen der Ausgabeschnittstelle (15) und den Wiedergabeeinheiten (17) kann in beliebig geeigneter Weise per Kabel, Infrarotstrahl, Funk oder auf andere Weise erfolgen. Hierbei können auch die Daten überörtlich von einer zur anderen Kundenstation (5,6) übertragen werden.

Auf Kundencomputer (12) ist zumindest ein geeignetes Abspielprogramm nebst geeigneter zusätzlicher Software-Tools gespeichert. Vorzugsweise läuft auf dem Kundencomputer (12) auch eine spezielle Radiosoftware, mit der zwischen den einzelnen Audio- und/oder visuellen Programmkomponenten professionelle und für herkömmliche Rundfunksender gültige Strukturen mit dynamischen Übergängen zwischen den einzelnen Programmelementen produziert werden. Diese Abspielprogramme nebst Software-Tools können bei der Datenübertragung gepflegt, aktualisiert (Update oder Upgrade) und ergänzt werden.

Außerdem sind vorzugsweise zumindest ein Teil der Audio- und/oder visuellen Programmkomponenten, insbesondere der immer wiederkehrenden Komponenten, wie bestimmte Musikstücke, Werbespots, Bildelemente, etc. auf dem Datenspeicher (16) gespeichert. Das komplette wiederzugebende Programm mit seinen in vorgegebener Reihenfolge zusammengestellten Audio- und/oder visuellen Komponenten entsteht vorzugsweise erst beim Kunden (3). Hierbei werden die beim Kunden (3) gespeicherten Komponenten mit anderen vom Anbieter (2) übertragenen Komponenten nach dem vorgegebenen Ablaufplan vor Ort gemischt und wiedergegeben.

Das komplette wiederzugebende Programm wird vom Anbieter (2) in einem bestimmten wählbaren Rhythmus zusammengestellt. Bei jedem Programmwechsel überträgt der Anbieter (2) an den Kunden (3) bzw. an die jeweils angesprochene Kundenstation (5,6,7,8) zumindest einen neuen Ablaufplan, die sogenannte Playliste. Dieser Programmteil stellt sich als Steuerprogramm dar, welches eine Reihe von Steuerbefehlen zum Aufrufen und Abspielen der Komponenten beinhaltet. Dieses Steuerprogramm wird auf dem Kundencomputer (12) gespeichert und läuft dort ab. Es greift hierbei zum einen auf die beim Kunden (3) bzw. der Kundenstation (5,6,7,8) gespeicherten Audio- und/oder visuellen Daten zurück. Hierdurch verringert sich die übertragene Datenmenge. Der Anbieter (2) muss nicht bei jedem Programmwechsel das komplette Programm mit allen Komponenten übertragen. Alternativ ist dies aber auch möglich.

Zusätzlich kann das Steuerprogramm vom Kundencomputer (12) auch auf Komponenten zurückgreifen, die in der Basisstation (4) gespeichert sind und diese abrufen. Hierdurch ist eine kundenspezifische rasche Aktualisierung des wiederzugebenden Programms möglich. Das Steuerprogramm kann hierbei Platzhalter für inhaltsvariable Komponenten, z.B. für Nachrichten enthalten, die in der Basisstation (4) gespeichert und dort im Inhalt ständig zeitnah aktualisiert werden. Solche Platzhalter sind auch für andere Programmkomponenten möglich, so dass ein Steuerprogramm in seinem Ablauf über längere Zeit konstant bleiben kann, wobei sich nur die Inhalte der Platzhalter von Zeit zu Zeit ändern.

Die auf dem Kundencomputer (12) gespeicherten Audio- und/oder visuellen Komponenten werden ebenfalls zumindest zum Großteil vom Anbieter (2) über das Datenübertragungsnetzwerk (9) übermittelt und in größeren Abständen aktualisiert. Im Steuerprogramm kann auch bzgl. dieser kundenseitig gespeicherten Komponenten mit Platzhaltern für inhaltsvariable Daten gearbeitet werden. Die Übertragung der Audio- und/oder visuellen Komponenten vom Anbieter (2) zum kundenseitigen Computer (12) erfolgt vorzugsweise getrennt von der Übertragung des Steuerprogramms. Sie kann mit diesem aber auch gekoppelt werden.

Die kundenseitigen Computer (12) sind vorzugsweise als von der Basisstation (4) fernsteuerbare Terminals ausgebildet, die außer der DFÜ-Schnittstelle (14) keine weiteren Eingabeschnittstellen aufweisen und vorzugsweise auch keinen Netzschalter haben. Die Datenübertragung über das Netzwerk (9) ist bi-direktional, so dass vom Anbieter (2) die kundenseitigen Computer (12) nicht nur ferngesteuert, sondern auch per Ferndiagnose überwacht und ggf. bei Auftreten von Störungen per Fernwartung repariert werden können. Durch das Fehlen zusätzlicher Eingabeschnittstellen sind unbeabsichtigte oder unerwünschte Eingriffe auf Kundenseite zumindest weitgehend ausgeschlossen. Die gesamte Installation von Computer (12) und Wiedergabeeinheiten (17) bietet dabei eine geschlossene und selbstständige Einheit, die dem Kundenzugriff weitgehend entzogen ist. Die komplette Produktion, Gestaltung und Übermittlung des audio-visuellen Programms liegt dadurch beim Anbieter (2). Der Kunde (3) ist Besteller und Empfänger dieser Programmdaten, die im Push-Modus vom Anbieter (2) übermittelt werden können.

Alternativ oder zusätzlich ist es auch möglich, dass der Kunde (3) eine Auswahlmöglichkeit aus dem breiteren Programmangebot hat und im Abrufmodus die von ihm gewünschten Programmdaten beim Anbieter (2) abruft (Pull-Modus) und bei sich abspielen lässt. In diesem Fall können ein oder mehrere der zum Abspielen vorgesehenen Computer (12) eine entsprechende Eingabeschnittstelle, wie z.B. eine Tastatur, eine Maus und einen Monitor aufweisen. Hierbei ist aber auch eine Kombination möglich, so dass die Abspielcomputer (12) nach wie vor fernsteuerbare Terminals bleiben und der Kunde einen separaten und zusätzlichen Steuercomputer (nicht dargestellt) hat, von dem er aus den Datenabruf tätigt.

Der Anbieter (2) hat an seiner Basisstation (4) oder an anderer Stelle geeignete Produktionseinrichtungen zum Erstellen der Audio- und/oder visuellen Programme und ihrer Komponenten. Hierbei werden z.B. Musiklaufpläne, Wortbeiträge, Videoclips, Promos usw. produziert und zusammengestellt. Mit Hilfe eines zentralen Produktionssystems kann täglich ein neuer kundenspezifischer Sendeplan (Playliste) mit den dazugehörenden aktuellen Inhalten erarbeitet und auf die kundenseitigen Abspielcomputer (12) übertragen werden. In der Basisstation (4) sind hierfür vorzugsweise mehrere leistungsfähige Computer (12) eingesetzt, von denen in Figur 1 der Übersicht halber nur einer dargestellt ist. Hierbei kann es sich um Planungsrechner, Audio-Server, Video-Server, Datenbank-Server, Server (13), Produktions-Web-Stations und dergleichen handeln, die jeweils mit einer speziellen Radiosoftware ausgestattet sind. Für die Programmplanung und -zusammenstellung kommt eine Spezialsoftware zum Einsatz, wie sie auch in normalen Radio- und Sendeanstalten verwendet wird. Kombiniert wird diese Software über Schnittstellen mit weiteren Spezialprogrammen, wie etwa Musikplanungs-Software, Schnittplatz-Software, Programmen für die Werbezeitendisposition und dergleichen. Hinzu kommen spezielle Programme und Tools für die Ferndiagnose, Fernwartung und sonstige Steuerung bzw. Überwachung der kundenseitigen Computer (12).

Die gesamte Übertragungseinrichtung (1) kann vom Anbieter (2) den jeweiligen Kunden (3) angeboten und geliefert werden. Hierbei installieren auch Mitarbeiter des Anbieters (2) in den Kundenstationen (5,6,7,8) die Abspielcomputer (12) und schließen sie an die vorhandenen oder ggf. nachzurüstenden Wiedergabeeinheiten (17) an. Hierbei werden die Abspielbedingungen, z.B. Lautstärke, Lichtregelung, etc. vor Ort ausgetestet und gleich im Abspielprogramm auf dem Datenträger (16), z.B. einer Festplatte, einem Festspeicher oder dergleichen gespeichert. Hierbei wird auch der Leitungsanschluss geschaffen. Telefonleitungen sind bei den Kunden üblicherweise vorhanden. Die kundenseitigen Abspielcomputer (12) sind mit geeigneten ISDN-Karten, Modems oder dergleichen ausgerüstet und werden an diese Leitungen angeschlossen. Sie haben hierbei ihre eigene IP-Adresse und können über die Datenleitungen (10,11) sowie ihre Client-Software direkt angesprochen werden bzw. ihrerseits direkt mit der Basisstation (4) kommunizieren. Um diese Dinge braucht sich der Kunde nicht zu kümmern. Die Einbindung über das Internet erfolgt mit Hilfe eines geeigneten Providers und dessen Backbone.

Die vom Anbieter (2) übertragenen Programmdaten liegen in geeigneten Formaten vor. Durch die Abspeicherung wiederkehrender Programmelemente beim Kunden (3) vor Ort brauchen lediglich in den gewünschten Rhythmen, z.B. täglich neue Inhalte und aktuelle Sendepläne übermittelt und in die Datenbanken auf den Datenspeichern (16) der kundenseitigen Abspielcomputer (12) integriert zu werden. Hierbei können auch zu kostengünstigen Sendezeiten, z.B. bei Nacht, die vor Ort gespeicherten wiederkehrenden Programmelemente ausgetauscht oder neu überspielt werden. Die Audio-Daten oder Video-Daten werden hierbei in komprimierter Form und in einem geeigneten Format, z.B. MPEG Ziffer 1, Layer 3 übertragen. Die Audio-Daten können in Mono oder in Stereo vorliegen.

Abwandlungen der gezeigten Ausführungsform sind in verschiedener Weise möglich. Die Zahl, Anordnung und Ausstattung der Computer (12) oder anderer Recheneinheiten beim Anbieter (2) und/oder Kunden (3) kann beliebig variieren. Variabel sind auch die Datenübertragungsmöglichkeiten, die bei beschränkten Örtlichkeiten auf Richtfunk oder dergleichen andere zielgerichtete Verbindungen zwischen Sender und Empfänger einschließen. Die Auswahl richtet sich vorzugsweise nach der Verfügbarkeit und den Kosten und kann ggf. auch variieren, so dass das Datenübertragungsnetzwerk (9) aus mehreren Netzen, z.B. kombinierter Internetübertragung und Satellitenübertragung oder dergleichen bestehen kann.

## Patentansprüche

1. Verfahren zum Erstellen, Übertragen und Abspielen von Audioprogrammen und/oder visuellen Programmen zwischen mindestens einem Anbieter (2) und ein oder mehreren Kunden (3), wobei
- vom Anbieter (4) für den Kunden (3) kundenspezifische Audioprogramme und/oder visuelle Programme mit Hilfe von mindestens einer Basisstation (4) produziert werden,
- die Programme aus mehreren verschiedenen Audio - und/oder visuellen Programmkomponenten bestehen, die in einem Ablaufplan miteinander kombiniert und aufeinander abgestimmt werden,
- die Programme an den jeweiligen Kunden (3) von der Basisstation (4) über ein Datenübertragungsnetzwerk (9) kundenspezifisch direkt übertragen werden,
- die Programme beim Kunden auf mindestens einer zur Wiedergabe der Audioprogramme und/oder visuellen Programme vorgesehenen Kundenstation (5,6,7,8) vom Anbieter (4) ferngesteuert abgespielt werden,
- die Programme vor Ort beim Kunden (3) erstellt werden, wobei vom Anbieter (2) Steuerprogramme an den Kunden (3) übermittelt werden, die auf eine Abspielsoftware und auf Programmkomponenten zurückgreifen, die auf der Kundenstation (5,6,7,8) gespeichert sind,
- auf dem Kundencomputer (12) eine Software gespeichert wird, mit der zwischen den einzelnen Audio- und/oder visuellen Programmkomponenten professionelle und für herkömmliche Rundfunksender gültige Strukturen mit dynamischen Übergängen zwischen den einzelnen Programmelementen produziert werden,
- die Steuerprogramme vom Kundencomputer (12) für Programmaktualisierungen in bidirektionaler Kommunikation auf die Basisstation (4) zugreifen und dort gespeicherte Programmkomponenten abrufen.

2. Verfahren nach Anspruch 1, **dadurch gekennzeichnet, dass** der Anbieter (2) und die Kunden (3) auf gleichen oder gleichartigen Datenübertragungswegen miteinander kommunizieren.

3. Verfahren nach Anspruch 1, **dadurch gekennzeichnet, dass** die vom Anbieter (2) die an den Kunden (3) zu übertragenden Daten gesplittet und auf unterschiedlichen Datenübertragungswegen übermittelt werden.

4. Verfahren nach Anspruch 1, 2 oder 3, **dadurch gekennzeichnet, dass** vom Anbieter (2) die an den Kunden (3) zu übertragenden Daten gesplittet und zeitversetzt übertragen werden.

5. Verfahren nach einem der vorhergehenden Ansprüche, **dadurch gekennzeichnet, dass** die Daten vom Anbieter (2) an den Kunden (3) auf Datenträgern übermittelt werden.

6. Vorrichtung zum Erstellen, Übertragen und Abspielen von Audioprogrammen und/oder visuellen Programmen zwischen mindestens einem Anbieter (2) und ein oder mehreren Kunden (3), wobei
- der Anbieter (4) mindestens eine Basisstation (4) mit Produktionseinrichtungen zur Erstellung kundenspezifischer Audioprogramme und/oder visueller Programme aufweist,
- die Programme aus mehreren verschiedenen Audio - und/oder visuellen Programmkomponenten bestehen, die in einem Ablaufplan miteinander kombiniert und aufeinander abgestimmt sind,
- der jeweilige Kunde (3) mindestens eine Kundenstation (5,6,7,8) zur Wiedergabe der Audioprogramme und/oder visuellen Programme aufweist,
- die Basisstation (4) und die Kundenstation(en) (5,6,7,8) über ein Datenübertragungsnetzwerk (9) in bidirektionaler Kommunikation direkt miteinander verbunden sind,
- die Kundenstation (5,6,7,8) mindestens einen als fernsteuerbares Terminal ausgebildeten Computer (12) mit einer DFÜ-Schnittstelle (14), mit mindestens einem Datenspeicher (16) und mit einer Audio- und/oder visuellen Ausgabe-Schnittstelle (15) aufweist, welche an eine Audio- und/oder visuelle Wiedergabeeinrichtung (17) angeschlossen ist,
- auf dem Kundencomputer (12) eine Abspielsoftware, zumindest ein Teil der wiederkehrenden Audioelemente und/oder visuellen Elemente und eine Software gespeichert sind, mit der zwischen den einzelnen Audio- und/oder visuellen Programmkomponenten professionelle und für herkömmliche Rundfunksender gültige Strukturen mit dynamischen Übergängen zwischen den einzelnen Programmelementen produzierbar sind,
- die Steuerprogramme vom Kundencomputer (12) für Programmaktualisierungen in bidirektionaler Kommunikation mit der Basisstation (4) zum Abruf von dort gespeicherten Programmkomponenten verbunden sind.

7. Übertragungseinrichtung nach Anspruch 6, **dadurch gekennzeichnet, dass** das Datenübertragungsnetzwerk (9) gleiche oder gleichartige Datenübertragungswege zwischen Anbieter (2) und Kunde(n) (3) aufweist.

8. Übertragungseinrichtung nach Anspruch 6 oder 7, **dadurch gekennzeichnet, dass** das Datenübertragungsnetzwerk (9) in einer Kommunikationsrichtung unterschiedliche und parallel nutzbare Datenübertragungswege zwischen Anbieter (2) und Kunde(n) (3) aufweist.

9. Übertragungseinrichtung nach Anspruch 6, 7 oder 8, **dadurch gekennzeichnet, dass** das Datenübertragungsnetzwerk (9) das Internet ist, an das die Basisstation (4) und die Kundenstation(en) (5,6,7,8) über Datenleitungen (10,11) und mindestens einen Server (13) angeschlossen sind.

10. Übertragungseinrichtung nach Anspruch 6, 7 oder 8, **dadurch gekennzeichnet, dass** das Datenübertragungsnetzwerk (9) als Satelliten-Übertragungssystem oder als Datenträgeraustauschsystem ausgebildet ist.

11. Übertragungseinrichtung nach einem der Ansprüche 6 bis 10, **dadurch gekennzeichnet, dass** die kundenseitigen Computer (12) ohne örtliche Eingabe-Schnittstellen ausgebildet sind.

12. Übertragungseinrichtung nach einem der Ansprüche 6 bis 11, **dadurch gekennzeichnet, dass** die Basisstation (4) Produktionseinrichtungen zur Erstellung kundenspezifischer Programme und mindestens einen Computer (12) mit einer DFÜ-Schnittstelle (14) und mit mindestens einem Datenspeicher (16) aufweist.

13. Übertragungseinrichtung nach einem der Ansprüche 6 bis 12, **dadurch gekennzeichnet, dass** die Basisstation (4) als Server (13) ausgebildet ist.

## Claims

1. Method for creating, transmitting and playing back audio programmes and/or visual programmes between at least one provider (2) and one or more customers (3), where
- the provider (A) uses at least one base station (4) to produce customer-specific audio programmes and/or visual programmes for the customer (3),
- the programmes comprise a plurality of different audio and/or visual programme components which are combined with one another in a flowchart and are tuned to one another,
- the programmes are directly transmitted to the respective customer (3) from the base station (4) via a data communication network (9) on a customer-specific basis,
- the programmes are played back at the customer's premises by the provider (4) under remote control on at least one customer station (5, 6, 7, 8) provided for reproduncing the audio programmes and/or visual programmes,
- the programmes are created in situ at the premises of the customer (3), the provider (2) sending to the customer (3) control programs which resort to playback software and to programme components which are stored on the customer station (5, 6, 7, 8),
- the customer computer (12) stores software which is used to produce, between the individual audio and/or visual programme components, professional structures (which are valid for conventional broadcast radio stations) with dynamic crossovers between the individual programme elements,
- the control programs access the base station (4) from the customer computer (12) for programme updates in two-way communication and retrieve programme components stored on said base station.

2. Method according to Claim 1, **characterized in that** the provider (2) and the customer (3) communicate with one another on the same or similar data communication paths.

3. Method according to Claim 1, **characterized in that** the data to be transmitted from the provider (2) to the customer (3) are sent in split form and on different data communication paths.

4. Method according to Claim 1, 2 or 3, **characterized in that** the provider (2) transmits the data to be transmitted to the customer (3) in split form and with a time offset.

5. Method according to one of the preceding claims, **characterized in that** the data are sent from the provider (2) to the customer (3) on data storage media.

6. Apparatus for creating, transmitting and playing back audio programmes and/or visual programmes between at least one provider (2) and one or more customers (3), where
- the provider (4) has at least one base station (4) with production devices for creating customer-specific audio programmes and/or visual programmes,
- the programmes comprise a plurality of different audio and/or visual programme components which are combined with one another in a flowchart and are in tune with one another,
- the respective customer (3) has at least one customer station (5, 6, 7, 8) for reproducing the new audio programmes and/or visual programmes,
- the base station (4) and the customer station(s) (5, 6, 7, 8) are directly connected to one another via a data communication network (9) in two-way communication,
- the customer station (5, 6, 7, 8) has at least one computer (12) in the form of a remotely controllable terminal with a remote data communication interface (14), with at least one data store (16) and with an audio and/or visual output interface (15) which is connected to an audio and/or visual reproduction device (17),
- the customer computer (12) stores playback software, at least some of the recurring audio elements and/or visual elements and software which can be used to produce, between the individual audio and/or visual programme components, professional structures (which are valid for conventional broadcast radio stations) with dynamic crossovers between the individual programme elements,
- the control programs on the customer computer (12) are connected to the base station (4) in order to retrieve programme components stored on said base station for the purpose of programme updates in two-way communication.

7. Transmission device according to Claim 6, **characterized in that** the data communication network (9) has the same or similar data communication paths between provider (2) and customer(s) (3).

8. Transmission device according to Claim 6 or 7, **characterized in that** the data communication network (9) has different data communication paths (which can be used in parallel) between provider (2) and customer(s) (3) in one communication direction.

9. Transmission device according to Claim 6, 7 or 8, **characterized in that** the data communication network (9) is the Internet, to which the base station (4) and the customer station(s) (5, 6, 7, 8) are connected via data lines (10, 11) and at least one server (13).

10. Transmission device according to Claim 6, 7 or 8, **characterized in that** the data communication network (9) is in the form of a satellite communication system or in the form of a data storage medium interchange system.

11. Transmission device according to one of Claims 6 to 10, **characterized in that** the customers' computers (12) are in a form without local input interfaces.

12. Transmission device according to one of Claims 6 to 11, **characterized in that** the base station (4) has production devices for creating customer-specific programmes and at least one computer (12) with a remote data communication interface (14) and with at least one data store (16).

13. Transmission device according to one of Claims 6 to 12, **characterized in that** the base station (4) is in the form of a server (13).

## Revendications

1. Procédé pour réaliser, transmettre et jouer des programmes audio et/ou des programmes visuels entre au moins un fournisseur (2) et un ou plusieurs clients (3),
- le fournisseur (4) produisant pour les clients (3) des programmes audio et/ou des programmes visuels spécifiques au client à l'aide d'au moins un poste de base (4),
- les programmes étant constitués de plusieurs composants différents de programmes audio et/ou visuels qui sont combinés et accordés les uns aux autres dans un scénario-maquette,
- les programmes étant transmis directement aux clients respectifs (3) d'une façon spécifique au client à partir du poste de base (4) par l'intermédiaire d'un réseau de transmission de données (9),
- le fournisseur (4) jouant les programmes chez le client de façon commandée à distance sur au moins un poste client (5, 6, 7, 8) prévu pour reproduire des programmes audio et/ou des programmes visuels,
- les programmes étant réalisés sur place chez le client (3), des logiciels de gestion qui font appel à un logiciel de lecture et à des composants de programme étant transmis par le fournisseur (2) aux clients (3) et étant conservés en mémoire dans le poste client (5, 6, 7, 8),
- un logiciel avec lequel on produit entre les divers composants audio et/ou visuels de programmes des structures professionnelles qui présentent des transitions dynamiques entre les divers éléments de programme et qui sont utilisables sur des émetteurs classiques de radiodiffusion étant conservé en mémoire dans l'ordinateur client (12),
- les programmes de gestion de l'ordinateur client (12) faisant appel au poste de base (4) par interconnexion bidirectionnelle afin de réactualiser le programme et demandant les composants de programme qui y sont conservés en mémoire.

2. Procédé selon la revendication 1, **caractérisé en ce que** le fournisseur (2) et les clients (3) communiquent les uns avec les autres par l'intermédiaire de voies identiques ou similaires de transmission de données.

3. Procédé selon la revendication 1, **caractérisé en ce que** les données à transmettre par le fournisseur (2) aux clients (3) sont fractionnées et sont transmises par diverses voies de transmission de données.

4. Procédé selon les revendications 1, 2 ou 3, **caractérisé en ce que** les données à transmettre par le fournisseur (2) aux clients (3) sont fractionnées et sont transmises en différé.

5. Procédé selon l'une des revendications précédentes, **caractérisé en ce que** les données sont transmises par le fournisseur (2) aux clients (3) par l'intermédiaire de supports de données.

6. Dispositif pour réaliser, transmettre et jouer des programmes audio et/ou des programmes visuels entre au moins un fournisseur (2) et un ou plusieurs clients (3),
- le fournisseur (4) présentant au moins un poste de base (4) qui présente des installations de production destinées à réaliser des programmes audio et/ou des programmes visuels spécifiques au client,
- les programmes étant constitués de plusieurs composants différents de programmes audio et/ou visuels qui sont combinés et accordés les uns aux autres dans un scénario-maquette,
- chaque client (3) présentant au moins un poste client (5, 6, 7, 8) destiné à reproduire des programmes audio et/ou des programmes visuels,
- le poste de base (4) et le ou les postes clients (5, 6, 7, 8) étant directement reliés les uns aux autres par interconnexion bidirectionnelle par l'intermédiaire d'un réseau (9) de transfert de données,
- le poste client (5, 6, 7, 8) présentant au moins un ordinateur (12) configuré comme terminal qui peut être commandé à distance, qui comprend une interface DFU (14), au moins une mémoire de données (16) et une interface (15) de sortie audio et/ou visuelle et qui est relié à une installation (17) de retransmission audio et/ou visuelle,
- un logiciel de lecture, au moins une partie des éléments audio et/ou des éléments visuels récurrents et un logiciel qui permettent de produire des structures professionnelles entre les divers composants audio et/ou visuels de programme, qui présentent des transitions dynamiques entre les divers éléments de programme et qui peuvent être utilisés sur des émetteurs classiques de radiodiffusion, étant conservés en mémoire dans l'ordinateur client (12),
- les programmes de gestion de l'ordinateur client (12) étant reliés par interconnexion bidirectionnelle au poste de base (4) pour demander les composants de programme qui y sont conservés en mémoire, afin de réactualiser le programme.

7. Installation de transmission selon la revendication 6, **caractérisée en ce que** le réseau (9) de transmission de données présente des voies identiques ou similaires de transmission de données entre le fournisseur (2) et le ou les clients (3).

8. Installation de transmission selon les revendications 6 ou 7, **caractérisée en ce que** le réseau (9) de transmission de données présente dans une direction d'interconnexion des voies distinctes de transmission de données qui peuvent être utilisées en parallèle entre le fournisseur (2) et le ou les clients (3).

9. Installation de transmission selon les revendications 6, 7 ou 8, **caractérisée en ce que** le réseau (9) de transmission de données est l'internet auquel le poste de base (4) et le ou les postes clients (5, 6, 7, 8) sont connectés par l'intermédiaire de lignes de données (10, 11) et d'au moins un serveur (13).

10. Installation de transmission selon les revendications 6, 7 ou 8, **caractérisée en ce que** le réseau (9) de transmission de données est configuré comme système de transmission par satellite ou comme système d'échange de supports de données.

11. Installation de transmission selon l'une des revendications 6 à 10, **caractérisée en ce que** les ordinateurs (12) situés du côté des clients sont configurés sans interface locale d'introduction de commandes.

12. Installation de transmission selon l'une des revendications 6 à 11, **caractérisée en ce que** le poste de base (4) présente des installations de production pour réaliser des programmes spécifiques au client et présente au moins un ordinateur (12) doté d'une interface DFU (14) et d'au moins une mémoire de données (16).

13. Installation de transmission selon l'une des revendications 6 à 12, **caractérisée en ce que** le poste de base (4) est configuré comme serveur (13).
